# EUROPÄISCHE PATENTSCHRIFT

(11) **EP 3 253 562 B1**
(45) Veröffentlichungstag und Bekanntmachung des Hinweises auf die Patenterteilung: **26.09.2018**
(21) Anmeldenummer: 15800825.0
(22) Anmeldetag: 25.11.2015
(51) Int. Cl.: B29C 70/52

(54) **ZUGVORRICHTUNG FÜR EINE PULTRUSIONSVORRICHTUNG**
PULLING DEVICE FOR A PULTRUSION DEVICE
DISPOSITIF DE TRACTION POUR DISPOSITIF D'EXTRUSION PAR ÉTIRAGE

(30) Priorität: 03.02.2015 DE 102015201795
(43) Veröffentlichungstag der Anmeldung: 13.12.2017
(73) Patentinhaber: Bayerische Motoren Werke Aktiengesellschaft, 80809 München (DE)
(72) Erfinder: EISCH, Christoph, 80939 München (DE)
(86) Internationale Anmeldenummer: PCT/EP2015/077587
(87) Internationale Veröffentlichungsnummer: WO 2016/124272

(56) Entgegenhaltungen:
- EP-A2- 0 347 590
- WO-A1-92/16350
- DD-A1- 238 943
- DE-A1- 19 853 525
- DE-B3-102005 024 840
- DE-T2- 69 605 645
- JP-A- 2000 280 321

## Beschreibung

Die Erfindung betrifft eine Zugvorrichtung für eine Pultrusionsvorrichtung zum Herstellen von Profilbauteilen, insbesondere von faserverstärkten Kunststoffprofilen, sowie eine Pultrusionsvorrichtung mit einer entsprechenden Zugvorrichtung.

Für die Herstellung von faserverstärkten Kunststoffprofilen ist beispielsweise aus der DE 10 2009 053 947 A1 ein Strangziehverfahren (auch als Pultrusionsverfahren bezeichnet) bekannt. In einem ersten Schritt werden auf Spulen vorgehaltene Verstärkungsfasern, beispielsweise aus Glas- oder Kohlenstofffasern, von den Spulen abgezogen und in einem Imprägnier-Werkzeug mit einer Matrix, beispielsweise einem Harz, imprägniert. In einem Vorformwerkzeug werden die imprägnierten Fasern vorausgerichtet, um diese in einem nachfolgenden Schritt mittels eines Strangziehwerkzeugs in die endgültige Profilform zu bringen und auszuhärten. Ein so hergestelltes Profil wird mithilfe einer Zugeinrichtung kontinuierlich durch die einzelnen Bearbeitungsstationen gezogen und anschließend einem Schneidwerkzeug zum Abtrennen von Segmenten definierter Länge zugeführt.

Die Zugeinrichtung umfasst zwei beabstandet zueinander angeordnete Raupen (ein sogenannter "Raupenabzug"), die einen Förderkanal bilden und sich in gegenläufiger Förderrichtung bewegen. Auf diese Weise wird ein zu förderndes Profil von den Raupen durch den Förderkanal mit kontinuierlicher Geschwindigkeit gefördert und gleichzeitig eine ausreichende Zugkraft zur Bearbeitung in den vorgelagerten Bearbeitungsstationen bereitgestellt.

Aus der DE 696 05 645 T2 sind alternative Ausführungsformen eines Ziehapparates bekannt. Hierbei umgreift ein Greifer (ein sogenannter "Klemmgreifer") das pultrudierte Profil und hält dieses fest, während der Ziehapparat in Pultrusionsrichtung verfahren wird und somit eine Zugkraft auf das Profil ausübt. Sobald der Ziehapparat seine Endposition erreicht hat, muss der Greifer gelöst und der Ziehapparat zurück in seine Anfangsposition verfahren werden, um dort das Profil nachzugreifen. Das Profil wird somit diskontinuierlich gefördert.

Gemäß einer ebenfalls beschriebenen Alternative ist ein zweiter Ziehapparat vorgesehen, der in gleicher Weise verfahren, jedoch alternierend zu dem ersten Ziehapparat bewegt wird. Sobald also der erste Ziehapparat seine Endposition erreicht und den ersten Greifer löst, wird ein zweiter Greifer des zweiten Ziehapparates geschlossen und das Profil durch ein Verfahren des zweiten Ziehapparates weitergezogen, während der erste Ziehapparat abgekoppelt von dem Profil zurück in seine Anfangsposition zurückfährt. Erreicht der zweite Ziehapparat seine Endposition, so wird der zweite Greifer gelöst und der Durchlauf beginnt erneut mit dem Schließen des ersten Greifers in der Ausgangsposition des ersten Ziehapparates und dem Verfahren des ersten Ziehapparates in dessen Endposition. Aufgrund der Bewegung in abwechselnden Zyklen erfährt das Profil eine kontinuierliche Bewegung.

Üblicherweise werden als Greifer Klemmbacken eingesetzt, die zwei parallel zueinander angeordnete Klemmflächen bilden und das Profil zwischen diesen einklemmen, um eine Zugkraft in das Profil einzuleiten. Hierbei muss die Klemmkraft ausreichend groß sein, um eine ausreichende Zugkraft bereitstellen zu können. Bei Verwendung einer derartigen zweiseitigen Klemmung kann mit den üblichen Verfahren eine Verformung des Profilquerschnitts nicht ausgeschlossen werden.

Insbesondere bei dünnwandigen Hohlprofilen kann eine nötige Klemmkraft höher sein als eine Belastbarkeit des Profils. In diesem Fällen ist bisher ein Stützdorn erforderlich, um das Profil zu stützen. Dies erzeugt einen hohen zusätzlichen Aufwand, der mit zusätzlichen Kosten und einer erhöhten Taktzeit verbunden ist.

Des Weiteren ist aus der EP 0 347 590 A2, die eine Vorrichtung gemäß dem Oberbegriff des Anspruchs 1 offenbart, eine Vorrichtung zur Handhabung und dem Zuschnitt eines extrudierten Elastomer-Profils bekannt.

Aufgabe der Erfindung ist es daher eine Zugvorrichtung bereitzustellen, welche eine Verformung des Profilstrangs vermindert oder sogar verhindert und dennoch eine Übertragung einer ausreichenden Zugkraft auf den Profilstrang ermöglicht.

Diese Aufgabe wird gelöst mit einer Pultrusionsvorrichtung gemäß Patentanspruch 1. Vorteilhafte Ausführungsformen ergeben sich aus den jeweils abhängigen Patentansprüchen.

Demnach wird eine Pultrusionsvorrichtung mit einer Zugvorrichtung bereitgestellt, wobei die Zugvorrichtung mindestens eine in einer Pultrusionsrichtung verfahrbare Spannvorrichtung umfasst, wobei die Spannvorrichtung zum kraftschlüssigen Greifen eines zu fördernden pultrudierten Profilstrangs ausgestaltet ist, um diesen mit einer Zugkraft zu beaufschlagen. Außerdem umfasst die Spannvorrichtung mindestens drei gegeneinander bewegbare Spannbacken zum umseitigen Klemmen des Profilstrangs. Außerdem sind die Spannbacken Teil einer Spannzange sind, die eine kegelförmige Außenkontur und Längsschlitze zum Trennen der Spannbacken voneinander umfassen, wobei eine Spannzangenaufnahme mit einem komplementär zu der kegelförmigen Außenkontur ausgebildeten Innenkegel zum Schließen der Spannzange und Anpressen der Spannbacken zum Klemmen des Profilstrangs vorgesehen ist.

Die Zugvorrichtung verfügt also über drei oder mehr Spannbacken, die gegeneinander bewegbar und zum umseitigen Klemmen des Profilstrangs ausgebildet sind, um die Zugkraft in den in vorgelagerten Bearbeitungsstationen der Pultrusionsvorrichtung mittels Pultrusion erzeugten Profilstrangs einzuleiten.

Mittels der mindestens drei Spannbacken wird eine Klemmkraft umseitig verteilt und eine Klemmung somit aus mindestens drei oder mehr unterschiedlichen Richtungen bewirkt, so dass eine unerwünschte Verformung des Profilstrangs zumindest reduziert wird. Eine Belastung des Profilstrangs durch die Klemmung wird gleichmäßig verteilt. Auf die aufwendige und kostenintensive Verwendung von Stützdornen kann somit verzichtet werden.

Vorzugsweise sind die Spannbacken in einer gemeinsamen Ebene angeordnet, die senkrecht zur Pultrusionsrichtung der Pultrusionsvorrichtung ausgerichtet ist. Es lässt sich somit eine möglichst optimale Klemmung erzielen, da die einzelnen Spannbacken jeweils eine Kraft bzw. Gegenkraft auf einen Querschnitt des Profilstrangs in dieser Ebene aufbringen. Ebenfalls vorzugsweise sind die Klemmrichtungen der Spannbacken in verschiedenen Richtungen innerhalb dieser Ebene ausgerichtet.

Gemäß einer Ausführungsform umfassen die Spannbacken jeweils eine Klemmfläche zur flächigen Beaufschlagung einer Außenkontur des Profilstrangs. Dank der flächigen Beaufschlagung wird die jeweilige Klemmkraft flächig auf der Außenkontur des Profilstrangs eingeleitet. Punktuelle Kraftspitzen, die den Profilstrang beschädigen oder lokal verformen könnten, werden auf diese Weise vermieden.

Vorzugsweise definieren die Klemmflächen der Spannbacken eine Innenkontur der Spannvorrichtung, die komplementär zu einer Außenkontur des zu klemmenden Profilstrangs ausgestaltet ist und einen Aufnahmeraum zur Anordnung des Profilstrangs umschließt. Dies bedeutet, dass die Klemmflächen dem Verlauf der Außenkontur des Profilstrangs folgen und entsprechend eine Negativform hierzu darstellen. Dies stellt eine möglichst großflächige Beaufschlagung des Profilstrangs sicher und verhindert in besonderem Maße dessen Verformung. Vorzugsweise sind die komplementär ausgebildeten Klemmflächen der Spannbacken innerhalb der Klemmebene umlaufend um den Profilstrang angeordnet und umschließen diesen in einem geklemmten Zustand im Wesentlichen vollständig. Somit wird eine lokale Verformung verhindert, da ein Eindrücken und ein Ausknicken des Profilstrangs nicht möglich sind.

Wie voranstehend beschrieben sind die Spannbacken Teil einer Spannzange, die eine kegelförmige Außenkontur und Längsschlitze zum Trennen der Spannbacken voneinander umfasst, wobei eine Spannzangenaufnahme mit einem komplementär zu der kegelförmigen Außenkontur ausgebildeten Innenkegel zum Schließen der Spannzange und Anpressen der Spannbacken zum Klemmen des Profilstrangs vorgesehen ist.

Die Spannzange ist - ähnlich zu Spannzangen für Werkzeugmaschinen - im Wesentlichen hülsenförmig ausgeführt und weist in ihrem Zentrum eine in ihrer Längsrichtung durch die Hülse erstreckte, durchgehende Aufnahmeöffnung auf. Durch diese wird der Profilstrang hindurch geführt, so dass die Aufnahmeöffnung größer als die Außenkontur des Profilstrangs sein muss. Die hülsenförmige Spannzange weist außerdem die beschriebene Längsschlitze in ihrer Wandung auf, die sich von einem offenen Ende entlang der Länge der Hülse erstrecken, jedoch nicht vollständig bis zu einem entgegengesetzten zweiten Ende durchgängig sind. An diesem zweiten Ende bleibt die Wandung ohne Längsschlitze und somit in Umfangsrichtung geschlossen ausgebildet. Durch die Längsschlitze werden im Bereich des offenen Endes Spannbacken gebildet, die (zumindest in gewissem Maße) zur Klemmung des Profilstrangs bewegbar sind.

Zu deren Betätigung ist die Spannzange mit einem als Außenkegel ausgebildeten Abschnitt ausgestaltet. Dieser Außenkegel wirkt mit einem Innenkegel der Spannzangenaufnahme derart zusammen, dass bei einer Längsverschiebung der Spannzangenaufnahme eine Bewegung der Spannbacken bewirkt wird.

Mittels der Spannzange ist es auf einfache Weise möglich den Profilstrang zu Klemmen und schnell wieder zu lösen. Es muss lediglich die Spannzangenaufnahme relativ zu der Spannzange entsprechend bewegt werden.

In jedem Fall kann die von den Spannbacken definierte Innenkontur rund, oval und/oder mehreckig ausgestaltet sein. Sie ist vorzugsweise an eine korrespondierend geformte Außenkontur des pultrudierten Profilstrangs angepasst.

Um den Vorteil der Klemmung durch die mindestens drei Spannbacken zu erhöhen, treffen sich die Klemmrichtungen der bewegbaren Spannbacken in einem gemeinsamen Zentrum. Besonders bevorzugt ist dieses gemeinsame Zentrum innerhalb der Innenkontur der Spannbacken, also in dem von den Spannbacken definierten Aufnahmebereich für den Profilstrang angeordnet.

Gemäß einer Ausführungsform sind die Spannbacken jeweils in einer radialen Richtung auf das gemeinsame Zentrum bewegbar. Eine Klemmrichtung und eine Bewegungsrichtung der jeweiligen Spannbacke ist in diesem Fall identisch.

Vorzugsweise umfasst die Zugvorrichtung zwei alternierend in Pultrusionsrichtung bewegbare Spannvorrichtungen, welche zur alternierenden Zugkraftbeaufschlagung des Profilstrangs ausgebildet sind. Diese Ausführung bietet die Möglichkeit, den Profilstrang in einer kontinuierlichen Bewegung zu fördern, indem zuerst die erste Spannvorrichtung geschlossen wird und den Profilstrang klemmt, um diesen in Pultrusionsrichtung zu ziehen. Die zweite Spannvorrichtung ist zu diesem Zeitpunkt geöffnet, so dass der Profilstrang ungehindert durch diese hindurch bewegt wird. Erst wenn die erste Spannvorrichtung die Endposition ihrer Bewegung erreicht hat, wird die erste Spannvorrichtung geöffnet und der Profilstrang freigegeben. Die zweite Spannvorrichtung wird entsprechend geschlossen, um den Profilstrang zu klemmen und in Längsrichtung bis zur Endposition der zweiten Spannvorrichtung zu ziehen. Dort wird die zweite Spannvorrichtung geöffnet. Die erste Spannvorrichtung ist in der Zwischenzeit zurück in ihre Ausgangsposition zurückbewegt worden und wird nach dem Öffnen der zweiten Spannvorrichtung im Wechsel geschlossen. Der Ablauf wird entsprechend wiederholt und erlaubt aufgrund des alternierenden Wechsels eine kontinuierliche Förderbewegung des Profilstrangs durch die Pultrusionsvorrichtung hindurch.

Die Erfindung wird nachfolgend unter Bezugnahme auf die Zeichnung anhand eines Ausführungsbreispiels näher erläutert. Es zeigen:
- Fig. 1: eine Pultrusionsvorrichtung gemäß dem Stand der Technik,
- Fig. 2: eine Spannvorrichtung für eine Zugvorrichtung einer Pultrusionsvorrichtung gemäß dem Stand der Technik, und
- Fig. 3: eine Spannvorrichtung mit einer Anzahl von Spannbacken gemäß der Beschreibung.

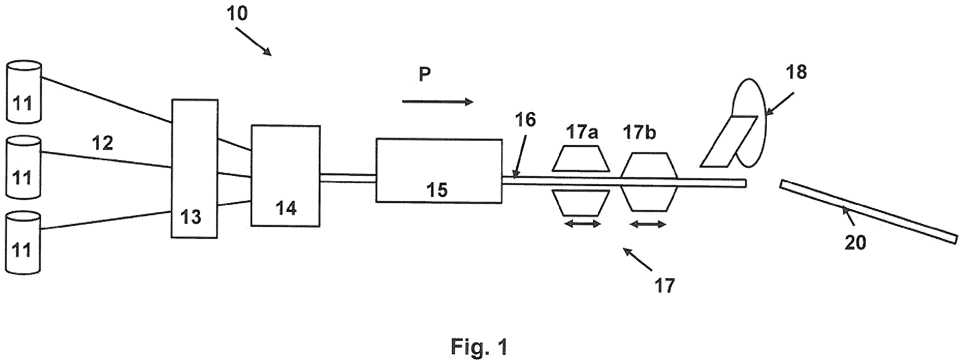

In Fig. 1 ist eine Pultrusionsvorrichtung 10 zum Herstellen von faserverstärkten Profilbauteilen 20 dargestellt. In einem ersten Schritt werden auf Spulen 11 vorgehaltene Verstärkungsfasern 12, beispielsweise aus Glas- oder Kohlenstofffasern, von den Spulen 11 abgezogen und in einem Imprägnier-Werkzeug 13 mit einer Matrix, beispielsweise einem Harz, imprägniert. In einem Vorformwerkzeug 14 werden die imprägnierten Fasern 12 vorausgerichtet, um diese in einem nachfolgenden Schritt mittels eines Strangziehwerkzeugs 15 in die endgültige Profilform zu bringen und auszuhärten. Ein so hergestellter Profilstrang 16 wird mithilfe einer Zugvorrichtung 17 kontinuierlich durch die einzelnen Bearbeitungsstationen 13,14,15 gezogen und anschließend einem Schneidwerkzeug 18 zum Abtrennen von Segmenten definierter Länge, den Profilbauteilen 20, zugeführt.

Die Zugvorrichtung 17 umfasst zwei Spannvorrichtungen 17a, 17b, die in der Pultrusionsrichtung P der Pultrusionsvorrichtung 10 jeweils zwischen einer Anfangs- und einer Endposition verfahrbar sind. Um den Profilstrang 16 kontinuierlich durch die Pultrusionsvorrichtung 10 zu bewegen, werden die beiden Spannvorrichtungen 17a, 17b wechselweise, also alternierend, zueinander verfahren.

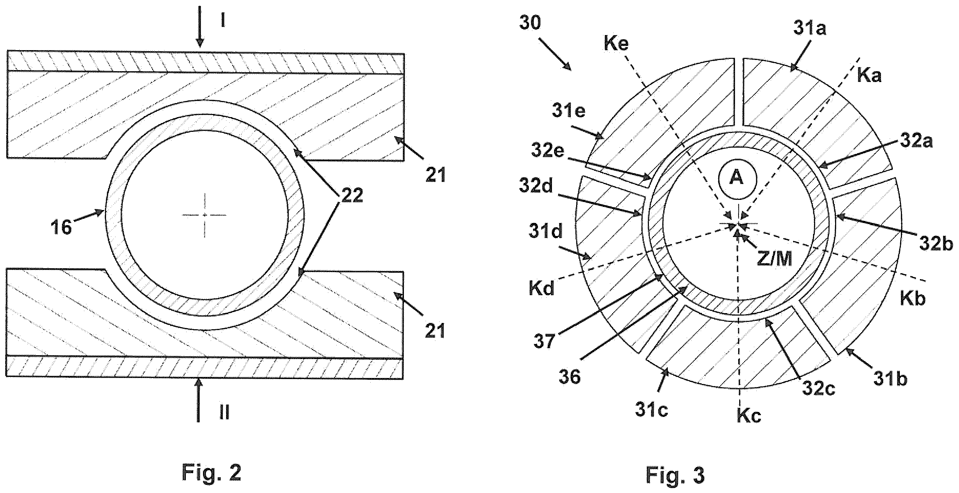

Fig. 2 zeigt üblicherweise eingesetzte Klemmbacken 21 beziehungsweise Spannbacken 21, die paarweise ausgebildet sind und den Profilstrang 16 aus zwei gegenüberliegenden Richtungen a,b einklemmen, um eine Zugkraft in den Profilstrang 16 einzuleiten. Die Spannbacken 21 sind in der Regel als flache Flächen ausgeführt oder weisen eine teilweise an den Profilstrang 16 angepasste Innenkontur 22 auf. Aufgrund der zweiseitigen Klemmung kann es zu einer Verformung eines Querschnitts des Profilstrangs 16 kommen, indem dieser seitlich ausweicht.

Fig. 3 zeigt eine Spannvorrichtung 30 mit einer Anzahl von Spannbacken 31a-e für eine Zugvorrichtung einer Pultrusionsvorrichtung (nicht dargestellt). Die Spannvorrichtung 30 ist zum kraftschlüssigen Greifen des pultrudierten Profilstrangs 36 ausgestaltet, um diesen mit einer Zugkraft zu beaufschlagen. Hierzu weist die Spannvorrichtung 30 beispielsweise fünf gegeneinander bewegbare Spannbacken 31a-e zum umseitigen Klemmen des Profilstrangs 36 auf. Jede der Spannbacken 31a-e umfasst jeweils eine Klemmfläche 32a-e zur flächigen Beaufschlagung einer Außenkontur des Profilstrangs 36.

Dadurch ist es möglich, dass die Klemmflächen 32a-e der Spannbacken 31a-e eine Innenkontur mit rundem Querschnitt der Spannvorrichtung 30 definieren, die komplementär zu einer Außenkontur 37 mit rundem Querschnitt des zu klemmenden Profilstrangs 36 ausgestaltet ist und einen Aufnahmeraum A zur Anordnung des Profilstrangs 36 umschließt. Der Profilstrang 36 wird somit in Umfangsrichtung im Wesentlichen vollständig umschlossen, so dass eine Klemmkraft rundum in den Profilstrang 36 eingeleitet und ein seitliches Ausweichen des Profilstrangs 36 bei einer Klemmkraftbeaufschlagung verhindert wird.

Die Spannbacken 31a-e sind dementsprechend kreisförmig angeordnet, so dass sich die Klemmrichtungen der bewegbaren Spannbacken 31a-e in einem gemeinsamen Zentrum Z treffen. In der dargestellten Ausführungsform ist das gemeinsame Zentrum Z gleich dem Mittelpunkt M des Profilstrangs 36. Im dargestellten Fall sind die Klemmrichtungen Ka-e identisch mit den radial gerichteten Bewegungsrichtungen (nicht separat dargestellt) der Spannbacken 31a-e, so dass die Spannbacken 31a-e jeweils in einer radialen Richtung auf das gemeinsame Zentrum bewegbar sind.

## Patentansprüche

1. Pultrusionsvorrichtung (10) mit einer Zugvorrichtung (17), wobei die Zugvorrichtung mindestens eine in einer Pultrusionsrichtung (P) verfahrbare Spannvorrichtung (30) umfasst, wobei die Spannvorrichtung (30) zum kraftschlüssigen Greifen eines zu fördernden pultrudierten Profilstrangs (36) ausgestaltet ist, um diesen mit einer Zugkraft zu beaufschlagen, und
die Spannvorrichtung (30) mindestens drei gegeneinander bewegbare Spannbacken (31a-e) zum umseitigen Klemmen des Profilstrangs (36) umfasst, **dadurch gekennzeichnet, dass** die Spannbacken (31a-e) Teil einer Spannzange sind, die eine kegelförmige Außenkontur und Längsschlitze zum Trennen der Spannbacken (31a-e) voneinander umfassen, wobei eine Spannzangenaufnahme mit einem komplementär zu der kegelförmigen Außenkontur ausgebildeten Innenkegel zum Schließen der Spannzange und Anpressen der Spannbacken (31a-e) zum Klemmen des Profilstrangs vorgesehen ist.

2. Pultrusionsvorrichtung nach Anspruch 1, **dadurch gekennzeichnet, dass** die Spannbacken (31a-e) jeweils eine Klemmfläche (32a-e) zur flächigen Beaufschlagung einer Außenkontur (37) des Profilstrangs (36) umfassen.

3. Pultrusionsvorrichtung nach Anspruch 2, **dadurch gekennzeichnet, dass** die Klemmflächen (32a-e) der Spannbacken (31a-e) eine Innenkontur der Spannvorrichtung (30) definieren, die komplementär zu der Außenkontur (37) des zu klemmenden Profilstrangs (36) ausgestaltet ist und einen Aufnahmeraum (A) zur Anordnung des Profilstrangs (36) umschließt.

4. Pultrusionsvorrichtung nach Anspruch 1 bis 3, **dadurch gekennzeichnet, dass** die Spannzange im Wesentlichen hülsenförmig ausgeführt ist und in ihrem Zentrum eine in ihrer Längsrichtung durch die Hülse erstreckte, durchgehende Aufnahmeöffnung zum Hindurchführen des Profilstrangs aufweist, wobei die Aufnahmeöffnung größer als die Außenkontur des Profilstrangs sein muss.

5. Pultrusionsvorrichtung nach einem der Ansprüche 3 bis 4, **dadurch gekennzeichnet, dass** die von den Spannbacken (31a-e) definierte Innenkontur rund, oval und/oder mehreckig ausgestaltet ist.

6. Pultrusionsvorrichtung nach einem der Ansprüche 1 bis 5, **dadurch gekennzeichnet, dass** sich die Klemmrichtungen (Kₐ₋ₑ) der bewegbaren Spannbacken (31a-e) in einem gemeinsamen Zentrum (Z) treffen.

7. Pultrusionsvorrichtung nach Anspruch 6, **dadurch gekennzeichnet, dass** die Spannbacken (31a-e) jeweils in einer radialen Richtung auf das gemeinsame Zentrum (Z) bewegbar sind.

8. Pultrusionsvorrichtung nach Anspruch 7, wobei die Zugvorrichtung zwei alternierend in Pultrusionsrichtung bewegbare Spannvorrichtungen (30) umfasst, welche zur alternierenden Zugkraftbeaufschlagung des Profilstrangs (36) ausgebildet sind.

## Claims

1. A pultrusion device (10) with a pulling device (17), wherein the pulling device comprises at least one clamping device (30) which can be moved in a pultrusion direction (P), wherein the clamping device (30) is configured to non-positively grip a pultruded profiled strand (36) which is to be conveyed, in order to act thereon with a tensile force, and
the clamping device (30) comprises at least three clamping jaws (31a-e), which are movable relative to each other, for peripherally clamping the profiled strand (36), **characterised in that** the clamping jaws (31a-e) are part of a collet chuck which comprises a cone-shaped external contour and longitudinal slots for separating the clamping jaws (31a-e) from each other, with a collet chuck receptacle with an inner cone, designed complementarily to the cone-shaped external contour, being provided for closing the collet chuck and pressing the clamping jaws (31a-e) on to clamp the profiled strand.

2. A pultrusion device according to Claim 1, **characterised in that** the clamping jaws (31a-e) in each case comprise one clamping face (32a-e) for acting on an external contour (37) of the profiled strand (36) over a surface area.

3. A pultrusion device according to Claim 2, **characterised in that** the clamping faces (32a-e) of the clamping jaws (31a-e) define an internal contour of the clamping device (30) which is configured complementarily to the external contour (37) of the profiled strand (36) which is to be clamped and encompasses a receiving space (A) for arranging the profiled strand (36).

4. A pultrusion device according to Claims 1 to 3, **characterised in that** the collet chuck is embodied substantially in a sleeve shape and has in its centre a continuous receiving opening, which is extended in its longitudinal direction through the sleeve, for passing the profiled strand through, the receiving opening having to be larger than the external contour of the profiled strand.

5. A pultrusion device according to one of Claims 3 to 4, **characterised in that** the internal contour defined by the clamping jaws (31a-e) is configured to be round, oval and/or polygonal.

6. A pultrusion device according to one of Claims 1 to 5, **characterised in that** the clamping directions (Kₐ₋ₑ) of the movable clamping jaws (31a-e) converge in a common centre (Z).

7. A pultrusion device according to Claim 6, **characterised in that** the clamping jaws (31a-e) in each case are movable in a radial direction towards the common centre (Z).

8. A pultrusion device according to Claim 7, wherein the pulling device comprises two clamping devices (30) which are movable in alternation in the pultrusion direction and which are designed to act in alternation with a tensile force on the profiled strand (36).

## Revendications

1. Dispositif d'extrusion par étirage (10) comprenant un dispositif de traction (17), dans lequel
le dispositif de traction comporte au moins un dispositif de serrage (30) mobile dans une direction d'extrusion par étirage (P), le dispositif de serrage (30) est conformé pour saisir par une liaison par la force un cordon profilé (36) extrudé par étirage devant être fourni pour le soumettre à une force de traction, et
le dispositif de serrage (30) comporte au moins trois mâchoires de serrage (31a-e) mobiles les unes par rapport aux autres pour permettre de serrer le cordon profilé (36) sur sa périphérie,
**caractérisé en ce que**
les mâchoires de serrage (31a-e) font partie d'une pince de serrage ayant un contour externe conique et des fentes longitudinales permettant de séparer les unes des autres les mâchoires de serrage (31a-e), et il est prévu un logement de réception de la pince de serrage ayant un cône interne complémentaire de la structure externe en forme de cône pour permettre de fermer la pince de serrage et de comprimer les mâchoires de serrage (31a-e) pour bloquer le cordon profilé.

2. Dispositif d'extrusion par étirage conforme à la revendication 1, **caractérisé en ce que**
les mâchoires de serrage (31a-e) comportent chacune une surface de blocage (32a-e) permettant de solliciter à plat le contour externe (37) du cordon profilé (36).

3. Dispositif d'extrusion par étirage conforme à la revendication 2, **caractérisé en ce que**
les surfaces de blocage (32a-e) des mâchoires de serrage (31a-e) définissent le contour interne du dispositif de serrage (30) qui est complémentaire du contour externe (37) du cordon profilé (36) à bloquer et entoure un volume de réception (A) du cordon profilé (36).

4. Dispositif d'extrusion par étirage conforme à l'une des revendications 1 à 3,
**caractérisé en ce que**
la pince de serrage est essentiellement en forme de manchon et comporte au niveau de son centre une ouverture de réception traversante s'étendant au travers du manchon dans sa direction longitudinale pour permettre le passage du cordon profilé, l'ouverture de réception devant être plus grande que le contour externe du cordon profilé.

5. Dispositif d'extrusion par étirage conforme à l'une des revendications 3 à 4,
**caractérisé en ce que**
le contour interne défini par les mâchoires de serrage (31a-e) est rond, ovale, et/ou polygonal.

6. Dispositif d'extrusion par étirage conforme à l'une des revendications 1 à 5,
**caractérisé en ce que**
les directions de serrage (Kₐ₋ₑ) des mâchoires de serrage mobiles (31a-e) se croisent au niveau d'un centre (Z) commun.

7. Dispositif d'extrusion par étirage conforme à la revendication 6, **caractérisé en ce que**
les mâchoires de serrage (31a-e) sont relativement mobiles en direction radiale par rapport au centre commun (Z).

8. Dispositif d'extrusion par étirage conforme à la revendication 7, dans lequel le dispositif de traction comporte deux dispositifs de serrage (30) mobiles en alternance dans la direction d'extrusion par étirage et qui sont réalisés pour permettre de soumettre en alternance le cordon profilé (36) à une force de traction.
